# EUROPÄISCHE PATENTSCHRIFT

(11) **EP 2 237 628 B1**
(45) Veröffentlichungstag und Bekanntmachung des Hinweises auf die Patenterteilung: **03.01.2018**
(21) Anmeldenummer: 10156784.0
(22) Anmeldetag: 17.03.2010
(51) Int. Cl.: H04W 52/32, H04W 52/34, H04W 52/28, H04W 52/52, H04W 52/14

(54) **EINRICHTUNG UND VERFAHREN ZUR STEUERUNG EINES LEISTUNGSVERSTÄRKERS EINER MOBILFUNKSENDEEINRICHTUNG**
METHOD AND DEVICE FOR CONTROLLING AN AMPLIFIER FOR A MOBILE PHONE TRANSMISSION DEVICE
DISPOSITIF ET PROCÉDÉ DE COMMANDE D'UN AMPLIFICATEUR DE PUISSANCE D'UN DISPOSITIF D'ÉMISSION DE RADIO MOBILE

(30) Priorität: 31.03.2009 DE 102009015090
(43) Veröffentlichungstag der Anmeldung: 06.10.2010
(73) Patentinhaber: Vodafone Holding GmbH, 40213 Düsseldorf (DE)
(72) Erfinder: Schneider, Peter, 41352, Korschenbroich (DE); Höhn, Volker, 47805, Krefeld (DE)
(74) Vertreter: Ring & Weisbrodt

(56) Entgegenhaltungen:
- EP-A2- 0 901 219
- EP-A2- 1 655 861
- WO-A1-03/036815
- US-A1- 2003 181 173

## Beschreibung

### Technisches Gebiet

Die Erfindung betrifft eine Einrichtung zur Steuerung eines Leistungsverstärkers einer Mobilfunksendeeinrichtung in einem Mobilfunknetz, umfassend eine Erfassungseinheit zur Erfassung von mindestens einem Mobilfunknetzparameter von Funkzellen einzelner oder mehrerer Mobilfunksendeeinrichtungen, eine Auswerteeinheit zur Bestimmung eines Sollwerts hinsichtlich der Größe Pilotkanalleistung anhand des mindestens einen Mobilfunknetzparameters, und eine Sendeeinheit für Steuerparameter, welche zur Übertragung des bestimmten Sollwerts angepasst ist.

Des Weiteren betrifft die Erfindung ein Verfahren zur Steuerung eines Leistungsverstärkers in einem Mobilfunknetz.

Ferner betrifft die Erfindung ein Computerprogrammprodukt, gespeichert auf einem Datenträger oder in einer über ein Datennetz herunterladbaren Form.

### Stand der Technik

Mobilfunknetze nach dem UMTS-Standard enthalten als einen wesentlichen Bestandteil ein Funkzugriffsnetz, welches als UMTS Terrestrial Radio Access Network (UTRAN) bezeichnet wird. Das UTRAN enthält eine Vielzahl von Mobilfunksende- und -empfangseinrichtungen, sogenannten Node-Bs, welche mit Funknetzkontrollern (RNC: Radio Network Controller) gesteuert werden. Zwischen den Mobilfunksende- und -empfangseinrichtungen und Mobilfunkendgeräten werden bidirektionale Funkverbindungen aufgebaut, um eine mobile Kommunikation zu ermöglichen. Dazu verfügen die Mobilfunksende- und -empfangseinrichtungen jeweils über eine Empfangseinrichtung zum Empfangen von Funksignalen von Mobilfunkendgeräten und eine Sendeeinrichtung zum Senden von Funksignalen.

Die Mobilfunksendeeinrichtung besteht prinzipiell aus drei Bestandteilen. Zunächst werden zu übermittelnde Daten in einem Basisbandabschnitt der Sendeeinrichtung zum Senden aufbereitet. Mit einem Funkfrequenzteil erfolgt eine Modulation der Daten auf Trägerfrequenzen. Die so generierten Funksignale werden schließlich in einem Leistungsverstärker zum Abstrahlen über eine Sendeantenne verstärkt. Typischerweise verfügt eine Mobilfunksende- und -empfangseinrichtung über drei Sendeantennen, die jeweils ein geografisches Gebiet abdecken. Ein von einer Sendeantenne einer Mobilfunksende- und -empfangseinrichtung versorgtes geografisches Gebiet wird auch als Funkzelle bezeichnet. Dabei ist zwischen benachbarten Funkzellen eine Überlappung erwünscht. Neben einem störungsfreien Wechsel eines bewegten Mobilfunkendgeräts von einer Funkzelle zu einer anderen Funkzelle wird hierdurch auch eine hohe Datenübertragungskapazität erreicht.

Derzeitige Leistungsverstärker für Mobilfunksendeeinrichtungen haben eine geringe Effizienz. Dies führt zu einer sehr hohen Leistungsaufnahme einer Mobilfunksende- und -empfangseinrichtung, um eine vergleichsweise geringe Sendeleistung abzustrahlen. Beispielsweise muss eine Mobilfunksende- und -empfangseinrichtung ca. 3000 Watt oder mehr aufnehmen, um jeweils ca. 40 Watt in drei Funkzellen abzustrahlen. In einem Mobilfunknetz nach dem UMTS-Standard ist eine Datenübertragungskapazität bzw. ein möglicher Teilnehmerdatenverkehr direkt an eine verfügbare Leistung gekoppelt. Um auf eventuell auftretende hohe Datenverkehrsaufkommen vorbereitet zu sein, werden Mobilfunksende- und -empfangseinrichtungen und insbesondere darin enthaltene Leistungsverstärker permanent so betrieben, dass die maximal mögliche Leistung des Leistungsverstärkers abgegeben werden kann. Diese Vorgehensweise führt jedoch nachteilhaft zu einem dauerhaft hohen Energieverbrauch mit entsprechend hohen Kosten und einem negativen Umwelteffekt.

Das U.S. Patent US 6.584.330 B1 offenbart ein Verfahren zur Schaltung eines Leistungsverstärkers einer Mobilfunksendeeinrichtung für ein zellulares Mobilfunknetz, bei dem je nach Datenverkehrsaufkommen einzelne Komponenten der Basisstation durch eine Stelleinheit abgeschaltet oder in einen Bereitschaftsmodus (Stand-By) geschaltet werden. Beispielsweise kann bei einer geringen Verkehrslast ein Multi-Trägerfrequenzleistungsverstärker von einem Betriebsmodus in einen energiesparenden Bereitschaftsmodus oder auch ausgeschaltet werden. Bei einer einsetzenden höheren Datenverkehrslast wird der Leistungsverstärker wieder in den Betriebsmodus geschaltet, wobei basierend auf dem fest voreingestellten Wert, der Leistungsverstärker im Betriebsmodus permanent seine höchstmögliche Leistung abgibt. Dies führt während der Betriebszeiten des Leistungsverstärkers wiederum zu einem hohen Energieverbrauch mit den bereits oben genannten Nachteilen.

Ferner offenbart die WO 03/1036815 A1 ein Verfahren zur Kontrolle eines Netzwerks, das aus wenigstens einer Zelle mit einer darin angeordneten Basisstation besteht, wobei die Basisstation ein Pilotsignal an sich im Abdeckungsbereich in der Zelle befindende Mobilfunkendgeräte aussendet. Die so von der Basisstation versorgten Mobilfunkendgeräte ermitteln ferner Messergebnisse bezüglich des von der Basisstation empfangenen Pilotsignals und stellen diese Messergebnisse zur Sammlung und Auswertung durch einen Radio Network Controller bereit. Auf diese Weise ist es möglich, das von der Basisstation gesendete Pilotsignal im Hinblick auf die Sendeleistung anhand der ausgewerteten Messergebnisse so anzupassen, dass eine ausreichende Abdeckung der Zelle mit dem Pilotsignal bei Minimierung von Netzressourcen sichergestellt wird.

Die EP 1 655 861 A2 offenbart eine Vorrichtung und ein Verfahren zur Kontrolle der Übertragungsleistung einer Basisstation, in deren Versorgungsgebiet Mobilfunkendgeräte angeordnet sind. Dabei wird anhand von den durch die Mobilfunkendgeräte empfangenen Signalen der Status des Versorgungsgebietes und der Gesamtstatus der Übertragungsleistung bestimmt. Ferner wird die Übertragungsleistung eines von der Basisstation an die Mobilfunkendgeräte ausgesendeten Pilotsignals bestimmt, wobei dieses Pilotsignal in Abhängigkeit vom Gesamtstatus der Übertragungsleistung und der aktuellen Übertragungsleistung des Pilotsignals zur Vermeidung einer Überlastung der Basisstation angepasst wird.

Ferner offenbart die EP 0 901 219 A2 ein System und ein Verfahren zur dynamischen Zuweisung von Leistung für Satellitenverstärker mit Mehrfachcharakteristik. Dabei wird der Spannungslevel eines Eingangssignals gemessen und in ein Gleichspannungssignal umgewandelt, welches anschließend an eine Kontrollvorrichtung zur Regulierung der Spannungsversorgung weitergegeben wird. Während einer erhöhten Belastung eines Übertragungskanals wird dadurch eine Erhöhung der Systemleistung für diesen Kanal durchgeführt.

Weiterhin werden in der US 2003/10181173 A1 ein System und ein Verfahren zur Optimierung von Leistungsverstärkern für Funkfrequenzsignale offenbart. Dabei wird jeder der Leistungsverstärker mit jeweils wenigstens einem Parameter kontrolliert, um die bezüglich der Ausgangsleistung bestehenden Anforderungen für das zu übertragende Funksignal, insbesondere bei der Verwendung von Beamforming zur Übertragung eines Signals, zu erfüllen.

### Offenbarung der Erfindung

Aufgabe der Erfindung ist es daher, Nachteile des Standes der Technik zu vermeiden und eine effektive Energieeinsparung bei Mobilfunksende- und - empfangseinrichtungen in einem Mobilfunknetz zu ermöglichen.

Erfindungsgemäß wird die Aufgabe mit einer Einrichtung der eingangs genannten Art zur Steuerung eines Leistungsverstärkers einer Mobilfunksendeeinrichtung in einem Mobilfunknetz dadurch gelöst, dass eine Erfassungseinheit zur Erfassung von mindestens einem Mobilfunknetzparameter von Funkzellen einzelner oder mehrerer Mobilfunksendeeinrichtungen, eine Auswerteeinheit zur Bestimmung eines Sollwerts hinsichtlich der Größe Pilotkanalleistung anhand des mindestens einen Mobilfunknetzparameters und eine Sendeeinheit für Steuerparameter, welche zur Übertragung des bestimmten Sollwerts angepasst ist, vorgesehen ist, wobei die Erfindung dadurch gekennzeichnet ist, dass die Auswerteeinheit Sollwerte für die folgenden Größen Leistungsverstärker-Betriebspunkt sowie Leistung anderer permanenter Kontrollkanäle berechnet und der berechnete Betriebspunkt-Sollwert des Leistungsverstärkers bewirkt, dass dieser wirksam auf eine notwendige Leistungsaufnahme für einen störungsfreien Datenverkehr je nach Datenverkehrsauslastung reduziert wird, wobei eine Ermittlung der bestimmten Sollwerte für Steuerparameter des Leistungsverstärkers für eine in naher Zukunft erwartete Auslastung des Mobilfunknetzes mittels in der Vergangenheit festgestellter Auslastungen des Mobilfunknetzes erfolgt.

Des Weiteren wird die Aufgabe durch ein Verfahren zur Steuerung eines Leistungsverstärkers in einem Mobilfunknetz mit folgenden Verfahrensschritten gelöst:
a) Empfangen von mindestens einem Mobilfunknetzparameter,
b) Auswerten des mindestens einen Mobilfunknetzparameters,
c) Festlegen eines Sollwerts hinsichtlich der Größe Pilotkanalleistung auf Basis des Auswerteergebnisses, und
d) Übertragen des mindestens einen festgelegten Sollwerts,
welches dadurch gekennzeichnet ist, dass Sollwerte für die folgenden Größen Leistungsverstärker-Betriebspunkt sowie Leistung anderer permanenter Kontrollkanäle berechnet werden und der berechnete Betriebspunkt-Sollwert des Leistungsverstärkers bewirkt, dass dieser wirksam auf eine notwendige Leistungsaufnahme für einen störungsfreien Datenverkehr je nach Datenverkehrsauslastung reduziert wird, wobei das Festlegen der Sollwerte auf Basis des Auswerteergebnisses für eine in naher Zukunft erwartete Auslastung des Mobilfunknetzes mittels in der Vergangenheit festgestellter Auslastungen des Mobilfunknetzes erfolgt.

Ferner wird die Aufgabe durch ein Computerprogrammprodukt, das auf einem Datenträger oder in einer über ein Datennetz herunterladbaren Form gespeichert ist, dadurch gelöst, dass das Computerproduktprogramm dazu angepasst ist, eine speicherprogrammierbare Steuerung, z.B. in einer Einrichtung in einem Mobilfunknetz, zur Umsetzung des erfindungsgemäßen Verfahrens zu steuern.

Die Erfindung beruht auf dem Prinzip, dass ein maximal vorgesehenes Datenverkehrsaufkommen in einem Gebiet eines Mobilfunknetzes, z.B. nach dem UMTS-Standard, nicht immer auftritt und daher ein permanenter Betrieb des Leistungsverstärkers zur Abgabe einer maximalen Leistung zur Bewältigung des Datenverkehrs nicht notwendig ist. Die Stelleinheit der erfindungsgemäßen Mobilfunksendeeinrichtung, passt die Betriebspunkt-Sollwerte eines oder mehrerer Leistungsverstärker in einer oder in mehreren Mobilfunksendeeinrichtungen eines Gebiets auf Basis des von der Auswerteeinheit mindestens einen mittels in der Vergangenheit festgestellter Auslastungen ermittelten und von der Sendeeinheit übertragenen Sollwerts an eine aktuelle oder in naher Zukunft erwartete Datenverkehrsauslastung des Mobilfunknetzes an. In der erfindungsgemäßen Einrichtung verwendet dazu die Auswerteeinheit die von der Erfassungseinheit empfangenen Mobilfunknetzparameter einer in der Vergangenheit festgestellten Auslastung in dem Gebiet, berechnet den mindestens einen notwendigen Sollwert und schickt ihn an die Stelleinheit einer oder mehrerer Mobilfunksendeeinrichtungen. Ein Betrieb des Leistungsverstärkers in einem eine Verstärkung durchführenden Betriebsmodus wird dabei nicht unterbrochen. Vielmehr werden beispielsweise Betriebspunkt-Sollwerte des Leistungsverstärkers und Betriebs-Sollwerte der Mobilfunksendeeinrichtung so eingestellt, dass eine zur Bewältigung des in naher Zukunft erwarteten Datenverkehrs und eines störungsfreien Betriebs des Mobilfunknetzes notwendige angepasste, optimale Leistungsaufnahme erreicht wird.

Bei dem korrespondierenden erfindungsgemäßen Verfahren wird entsprechend vorgegangen. Wie bei der korrespondierenden Ausbildung der erfindungsgemäßen Einrichtung wird durch das Verfahren der Leistungsverstärker zu jeder Zeit mit Betriebspunkt-Sollwerten betrieben, welche an eine aktuelle oder in naher Zukunft erwartete Auslastung des Mobilfunknetzes angepasst sind. Der berechnete aktuelle Betriebspunkt- Sollwert des Leistungsverstärkers bewirkt, dass dieser wirksam auf eine notwendige Leistungsaufnahme für einen störungsfreien Datenverkehr je nach Datenverkehrsauslastung reduziert wird. Hierbei ist ebenfalls ein Ermitteln von optimal aufeinander abgestimmten Sollwerten in der erfindungsgemäßen Einrichtung für mehrere Leistungsverstärker verschiedener Mobilfunksendeeinrichtungen möglich.

Durch die erfindungsgemäße Einrichtung, die Mobilfunksendeeinrichtung, das erfindungsgemäße Verfahren und das Computerprogrammprodukt werden ein Betriebspunkt eines Leistungsverstärkers anhand der empfangenen Mobilfunknetzparameter an ein aktuelles oder in naher Zukunft erwartetes Datenverkehrsaufkommen angepasst. Dadurch wird der Energieverbrauch einer Mobilfunksendeeinrichtung deutlich gesenkt. Werden
alle Mobilfunksendeeinrichtungen eines Mobilfunknetzes berücksichtigt, führt dies zu einer erheblichen Energieeinsparung. Ein Betrieb des Mobilfunknetzes ist wesentlich kostengünstiger und umweltschonender durchführbar.

In einer vorteilhaften Ausbildung der erfindungsgemäßen Einrichtung sind Mobilfunknetzparameter beispielsweise ein Funkzellenauslastungsparameter (engl.: Cell Load Information) oder ein Funkzellenauslastungsparameter in Bezug auf eine maximalen Funkzellenauslastungswert. Auf diese Weise lassen sich optimale Sollwerte für eine aktuelle Funkzellenauslastung unmittelbar und schnell berechnen.

Eine weitere Ausgestaltung der erfindungsgemäßen Einrichtung zur Steuerung eines Leistungverstärkers einer Mobilfunksendeeinrichtung in einem Mobilfunknetz wird dadurch erreicht, dass die Stelleinheit einen Sollwert zum Anpassen einer Kontrollkanalleistung übermittelt. Zum Beispiel kann auch die Leistung eines Pilotkanals angepasst werden. Ein Pilotkanal dient als Referenzkanal und muss überall in einer Funkzelle empfangbar sein. Vorzugweise wird daher die Pilotkanalleistung nur soweit gesenkt, dass eine geschlossene Funknetzversorgung erhalten bleibt. Auf diese Weise wird eine für ein hohes Verkehrsaufkommen vorgesehene Funkzellüberlappung auf eine für ein niedriges Verkehrsaufkommen notwendige Überlappung reduziert. Hierdurch wird in Zeiten niedrigen Verkehrsaufkommen weniger Leistung für Kontrollkanäle benötigt und daher eine Energieeinsparung erzielt.

In einer weiteren vorteilhaften Ausbildung der erfindungsgemässen Einrichtung ist der Sollwert für den Leistungsverstärker-Betriebspunkt ein in der Auswerteeinheit berechneter Wert. Hierbei besteht das Prinzip, dass der Sollwert nicht mehr auf einem voreingestellten, nichtveränderbaren maximalen Sollwert beruht, sondern auf einer Berechnung mindestens einer der folgenden Größen: Leistungverstärker-Betriebspunkt, Pilotkanalleistung und Leistung anderer permanenter Kontrollkanäle anhand der empfangenen Mobilfunknetzparameter der tatsächlichen aktuellen Auslastung in einem Gebiet basiert.

In einer vorteilhaften Ausbildung des erfindungsgemässen Verfahrens werden durch die erfindungsgemässe Einrichtung die Mobilfunknetzparameter mindestens einer Funkzelle in einem Gebiet empfangen und ausgewertet. Dabei werden die Mobilfunknetzparameter als Funkzellenauslastungsparameter oder als Funkzellenauslastungsparameter in Bezug auf einen maximalen Funkzellenauslastungswert empfangen und ausgewertet.

Auf diese Weise werden je nach Auslastung des Mobilfunknetzes optimierte Betriebspunkt-Sollwerte des Leistungsverstärkers ermittelt und an die Stelleinheit übertragen. Der Leistungsverstärker wird zu jeder Zeit durch die aktuelle Berechnung der Sollwerte in Betriebspunkten betrieben, welche an eine Auslastung des Mobilfunknetzes angepasst sind. Die Leistungsaufnahme des Leistungsverstärkers wird sehr wirksam auf eine notwendige Leistungsaufnahme für einen störungsfreien Datenverkehr je nach Datenverkehrsauslastung reduziert. Dabei ist beispielsweise auch ein Berechnen und Festlegen von optimal aufeinander abgestimmten Sollwerten für mehrere Leistungsverstärker verschiedener Mobilfunksendeeinrichtungen durch die Auswerteeinheit und ein Übermitteln der jeweiligen Sollwerte durch die Sendeeinheit der erfindungsgemässen Einrichtung an die entsprechenden Mobilfunksendeeinrichtungen möglich.

Weitere Ausbildungen des erfindungsgemäßen Verfahrens, der erfindungsgemäßen Einrichtung und der erfinderischen Mobilfunksendeeinrichtung und des erfinderischen Computerprogrammproduktes korrespondieren mit oben beschriebenen Ausgestaltungen der erfindungsgemäßen Einrichtung und verfügen jeweils über entsprechende Vorteile.

Ferner ergeben sich aus dem Gegenstand der Unteransprüche, sowie der Zeichnungen mit der dazugehörigen Beschreibung weitere Ausgestaltungen und Vorteile.

Ein Ausführungsbeispiel der Erfindung ist nachstehend unter Bezugnahme auf die zugehörigen Zeichnungen näher erläutert.

### Kurze Beschreibung der Zeichnungen

- Fig. 1: zeigt in einer schematischen Prinzipskizze Bestandteile eines Funkzugriffnetzes eines Mobilfunknetzes nach dem UMTS-Standard.
- Fig. 2: zeigt ein Ausschnitt des Funkzugriffsnetzes nach Fig. 1 mit einem Ausführungsbeispiel der erfindungsgemäßen Einrichtung und des erfindungsgemäßen Verfahrens zur Steuerung eines Leistungsverstärkers einer Mobilfunksendeeinrichtung.

### Bevorzugtes Ausführungsbeispiel

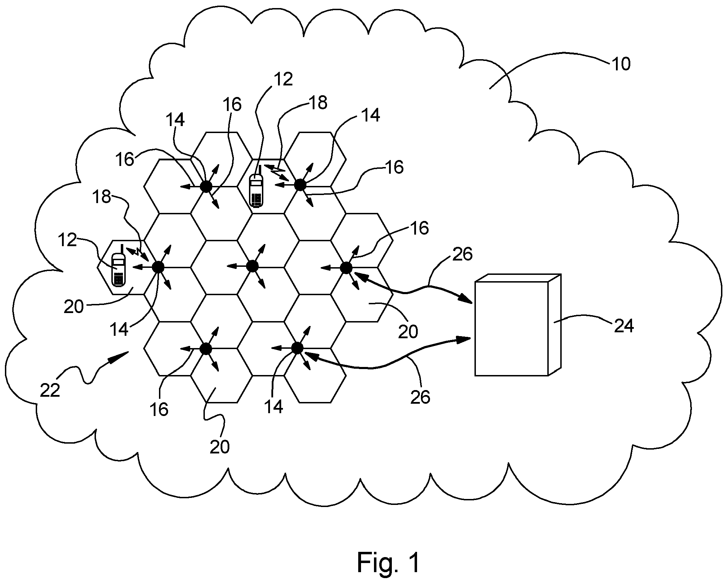

In Fig. 1 wird mit 10 ein Mobilfunknetz nach dem UMTS-Standard bezeichnet. Das Mobilfunknetz 10 enthält alle Bestandteile, welche für ein Mobilfunknetz nach dem UMTS-Standard erforderlich sind. Mobilfunknetze nach dem UMTS-Standard sind dem Fachmann geläufig. Das Mobilfunknetz 10 wird daher der Einfachheit halber nur durch eine Wolke stilisiert dargestellt. Mit einem Mobilfunkendgerät 12 kann ein Mobilfunkteilnehmer über das Mobilfunknetz 10 mobil kommunizieren oder angebotenen Dienste in Anspruch nehmen.

Insbesondere enthält das Mobilfunknetz 10 eine Vielzahl von Mobilfunksende- und - empfangseinrichtungen 14 zum Aufbau von bidirektionalen Funkverbindungen zu Mobilfunkendgeräten 12. Im Folgenden werden diese Einrichtungen kurz Mobilfunksendeeinrichtung 14 genannt. Eine Mobilfunksendeeinrichtung 14 verfügt über mindestens eine Sendeantenne 16 zum Senden von Funksignalen 18 an ein Mobilfunkendgerät 12. Mit einer in Fig. 1 nicht dargestellten Empfangsantenne empfängt die Mobilfunkempfangseinrichtung 14 Funksignale 18 von Mobilfunkendgeräten 12. Mit den Funksignalen 18 werden Daten zwischen einem Mobilfunkendgerät 12 und einer Mobilfunksendeeinrichtung 14 übermittelt.

Die Mobilfunksendeeinrichtungen 14 sind stationär angeordnet. Ein von einer Mobilfunksendeeinrichtung 14 mit einer Sendeantenne 16 abgedecktes geografisches Gebiet wird als eine Funkzelle 20 bezeichnet. In Fig. 1 sind die Funkzellen 20 als Sechsecke veranschaulicht. Reale Funkzellen nehmen je nach geologischen Formationen, Gebäuden, Vegetation und anderen Einflüssen in der Umgebung einer Mobilfunksendeeinrichtung 14 sehr unterschiedliche Formen an. Ferner überlappen sich reale Funkzellen, um eine hohe Datenübertragungskapazität und einen störungsfreien Wechsel eines Mobilfunkendgeräts von einer Funkzelle zu einer anderen Funkzelle zu gewährleisten. Die von den Mobilfunksendeeinrichtungen 14 realisierten Funkzellen 20 bilden zusammen ein geografisches Gebiet 22, in dem eine Nutzung des Mobilfunknetzes 10 mit Mobilfunkendgeräten 12 möglich ist. Hierbei ist das Gebiet 22 nicht notwendiger Weise ein zusammenhängendes Gebiet. Auch sind Bereiche ohne Abdeckung durch eine Funkzelle 20 in dem Gebiet 22 möglich.

Zur Steuerung der Mobilfunksendeeinrichtungen 14 ist in dem Mobilfunknetz 10 eine Funknetzkontrolleinrichtung 24 vorgesehen, die im Folgenden auch als RNC (Radio Network Controller) bezeichnet wird. Der RNC 24 steuert die Mobilfunksendeeinrichtungen 14 über Verbindungen 26. Typischerweise werden Gebiete 22 mit achtzig bis einhundert Funkzellen 20 von einem RNC 24 gesteuert. Verbindungen von einem Mobilfunkendgerät 12 in dem Gebiet 22 zu einem Endgerät in einem anderen Gebiet oder Kommunikationsnetz werden über den RNC 24 und ein in Fig. 1 nicht dargestelltes Vermittlungs- oder Kernnetz des Mobilfunknetzes 10 hergestellt. Alle Mobilfunksendeeinrichtungen 14 mit zugeordneten RNCs 24 bilden ein Funkzugriffsnetz des Mobilfunknetzes 10. Diese Funkzugriffsnetz wird im UMTS-Standard auch als UTRAN (UMTS Terrestrial Radio Access Network) bezeichnet wird.

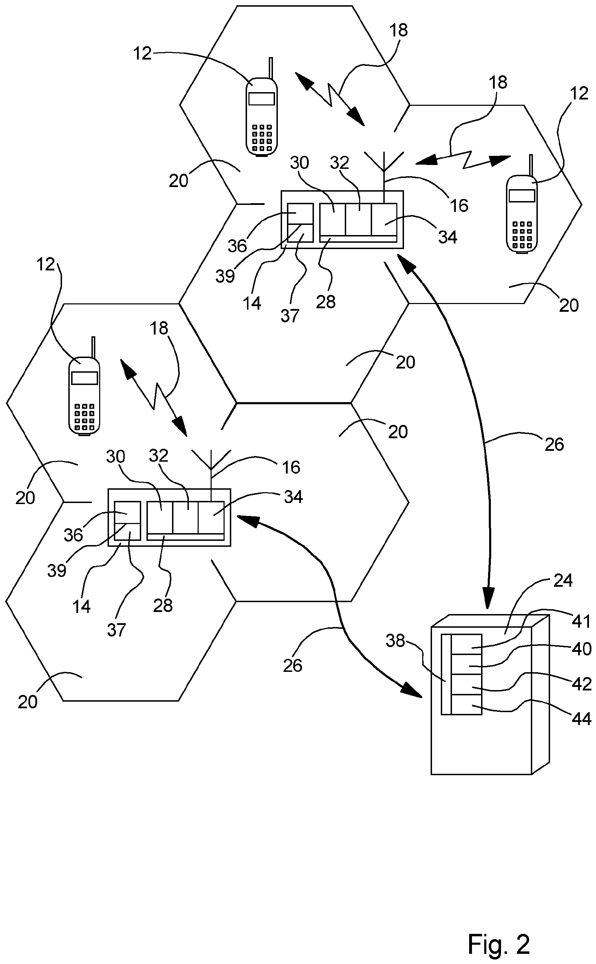

Fig. 2 stellt einen Ausschnitt des Mobilfunknetzes 10 nach Fig. 1 im Detail dar. Gleiche Bestandteile werden daher mit entsprechenden Bezugszeichen bezeichnet. In Fig. 2 sind zwei Mobilfunksendeeinrichtungen 14 dargestellt. Die Mobilfunksendeeinrichtungen 14 enthalten jeweils eine Sendeeinrichtung 28 mit einer Sendeantenne 16 zum Realisieren von Funkzellen 20. Die Mobilfunkendgeräte 12 empfangen Daten von einer Mobilfunksendeeinrichtung 14 mittels Funksignalen 18, welche von der jeweiligen Sendeeinrichtung 28 erzeugt und ausgestrahlt werden. Dazu enthält die Sendeeinrichtung 28 eine Basisbandeinheit 30, mit der zu übertragende Daten aufbereitet werden. In einer Funkfrequenzeinheit 32 der Sendeeinrichtung 28 erfolgt eine Erzeugung von Trägerfrequenzen und deren Modulation mit den Daten. Die so generierten Signale werden schließlich in einem Leistungsverstärker 34 verstärkt und über die Sendeantenne 16 abgestrahlt. Weiterhin ist in den Mobilfunksendeeinrichtungen 14 jeweils eine Stelleinheit 36 zum Steuern und Einstellen der Basisbandeinheit 30, der Funkfrequenzeinheit 32 und insbesondere des Leistungsverstärkers 34 oder Teile dieser Komponenten vorgesehen. Dazu ist die Stelleinheit 36 so ausgebildet, dass über die Verbindung 26 von dem RNC 24 an die Mobilfunksendeeinrichtung 14 übermittelte Informationen oder Befehle bei einer Steuerung berücksichtigt oder ausgeführt werden. Hierfür ist eine Empfangseinheit 37 zum Empfangen einer Auslastung des Mobilfunknetzes und von Betriebsparametern für den Leistungsverstärker 34 in der Mobilfunksendeeinrichtung 14 vorgesehen.

Der RNC 24 enthält eine Einrichtung 38 zur Steuerung eines Leistungverstärkers 34 der Mobilfunksendeeinrichtung 14 des Mobilfunknetzes 10 in dem Gebiet 22 oder Teilen davon. Hierfür umfasst die Einrichtung 38 eine Erfassungseinheit 40 zum Erfassen von Mobilfunknetzparametern von Funkzellen 20 einzelner oder mehrerer Mobilfunksendeeinrichtungen 14 in dem Gebiet 22 in dem Mobilfunknetz 10. Eine Auswertungseinheit 42 berechnet je nach Auslastung des Mobilfunknetzes 10 Sollwerte für Betriebspunkte des Leistungsverstärkers 34. Die Sollwerte sind hinsichtlich einer Reduzierung der Leistungsaufnahme des Leistungsverstärkers 34 unter Berücksichtigung der Auslastung des Mobilfunknetzes 10 optimiert. Eine Sendeeinheit 44 in der Einrichtung übermittelt die Sollwerte über eine oder mehrere Empfangseinheiten 37 und eine zwischen Empfangseinheit 37 und Stelleinheit 36 angepassten Schnittstelle 39 an Stelleinheiten 36 eines oder mehrerer Leistungsverstärker 34. Mit einer Stelleinheit 36 in der Mobilfunksendeeinrichtung 14 erfolgt eine Einstellung eines Betriebspunktes eines Leistungsverstärkers 34. Ferner werden in der Auswerteeinheit 42 Sollwerte aus den empfangenen Mobilfunknetzparametern berechnet um die Leistung des Pilotkanals (PCPICH) und anderer permanenter Kontrollkanäle (CCCH) sowie Sollwerte einer maximalen Leistung eines oder mehrerer Verkehrskanäle (TCH) anzupassen. Dazu werden für eine aktuelle oder in naher Zukunft erwartete Auslastung des Mobilfunknetzes 10 ermittelte Sollwerte für Steuerparameter des Leistungsverstärkers 34 von der Einrichtung 38 über die Verbindungen 26 an die Stelleinheiten 36 der Mobilfunksendeeinrichtungen 14 übertragen.

In alternativen Ausführungen können einzelne Komponenten der Einrichtung 38 auch in anderen Bestandteilen des Mobilfunknetzes 10 angeordnet sein. Insbesondere kann der RNC 24 mit der Einrichtung 38 auch in den Mobilfunksendeeinrichtungen 14 des Gebiets 22 integriert sein.

Im Folgenden wird die Funktionsweise der oben beschriebenen Komponenten der Einrichtung 38 zusammen mit einem entsprechenden Verfahren zur Steuerung eines Leistungverstärkers 34 einer Mobilfunksendeeinrichtung 14 in einem Mobilfunknetz 10 beschrieben. Dabei wird sowohl auf Fig.1 als auch auf Fig. 2 Bezug genommen.

Bei einer Nutzung eines Mobilfunkendgeräts 12 in einer Funkzelle 20 des Gebiets 22 werden je nach angefordertem Dienst ein bestimmtes Datenvolumen zwischen dem Mobilfunkendgerät 12 und der entsprechenden Mobilfunksendeeinrichtung 14 ausgetauscht. Das Mobilfunkendgerät übermittelt Daten als Funksignale 18 an die zuständige Mobilfunksendeeinrichtung 14 und empfängt Daten als von der Sendeeinrichtung 28 mit einer Sendeantenne 16 ausgestrahlte Funksignale 18.

Je nach Anzahl der aktiven Mobilfunkendgeräte 12 und Art der mit diesen Mobilfunkendgeräten 12 ausgeführten Dienste tritt ein zeitabhängiges Datenverkehrsaufkommen in jeder Funkzelle 20 des Gebiets 22 auf. Dieses führt zu einer entsprechenden Auslastung einer Mobilfunksendeeinrichtung 14 und des Mobilfunknetzes 10 in dem Gebiet 22. Eine Datenverkehrskapazität der Mobilfunksendeeinrichtungen 14 und anderer Bestandteile des Mobilfunknetzes 10 in dem Gebiet 22 ist daher so ausgelegt, das auch ein sehr hohes Datenverkehrsvolumen zu Spitzenzeiten, wie beispielsweise vormittags und nachmittags an Werktagen oder bei Sportveranstaltungen an Samstagnachmittagen bewältigt werden kann.

Eine Kapazität bzw. ein möglicher Teilnehmerverkehr einer Mobilfunksendeeinrichtung 14 ist direkt an eine verfügbare Leistung des jeweiligen Leistungsverstärkers 34 der Mobilfunksendeeinrichtung 14 gekoppelt. Anstatt jedoch den Leistungsverstärker 34 permanent so zu betreiben, dass eine maximale Leistung abgegeben werden kann, wird mit der Einrichtung 38 ein Betriebspunkt-Sollwert des Leistungsverstärkers 34 an eine aktuelle Auslastung des Mobilfunknetzes 10 in dem Gebiet 22 angepasst.

Zunächst wird mit der Erfassungseinheit 40 der Einrichtung 38 in dem RNC 24 vorliegende Mobilfunknetzparameter für die Einrichtung 38 erfasst. Dazu können beispielsweise von einzelnen Mobilfunkendgeräten 12 an eine jeweilige Mobilfunksendeeinrichtung 14 übermittelte Parameter zum Datentransfervolumen verwendet werden. Diese Mobilfunknetzparameter werden von den Mobilfunksendeeinrichtungen 14 an die Funknetzkontrolleinheit 24 weitergeleitet und dort ausgewertet. Als Mobilfunknetzparameter wird beispielsweise eine momentane Zell-Last-Information (Cell Load Information) oder eine momentane Dienstanforderungsinformation (Service Request Information) durch den RNC 24 verwendet. Die Einrichtung 38 wertet diese Informationen mit der Auswerteeinheit 42 aus, sendet die berechneten Sollwerte mit der Sendeeinheit 44 über die Verbindungen 26 an eine oder mehrere Empfangseinrichtungen 37 mit Schnittstellen 39 zu den Stelleinheiten 36 in den Mobilfunksendeeinrichtungen 14 und die Stelleinheit 36 oder mehrere Stelleinheiten 36 passt bzw. passen den Betriebspunkt eines oder mehrerer Leistungsverstärkers 34 des Gebiets 22 durch ermittelte Sollwerte entsprechend an. Dabei kann in einer weiteren Ausführung der Einrichtung 38 auch eine in naher Zukunft erwartete Auslastung berücksichtigt werden, welche durch in der Vergangenheit festgestellte Auslastungen prognostiziert wird. Vorzugsweise werden alle Leistungsverstärker 34 des Gebiets 22 gleichzeitig angepasst, um Interferenzen in den Funkzellen 20 zu vermeiden.

Mit der Stelleinheit 36 des Leistungsverstärkers 34 wird dabei eine maximal mögliche Leistung eines Leistungsverstärkers 34 und damit der Betriebspunkt des Leistungsverstärkers 34 eingestellt und an eine vorhandene bzw. zu erwartende Auslastung angepasst. Entsprechend überträgt die Sendeeinheit 44 der Einrichtung 38 die Pilotkanalleistung und Leistungen anderer permanenter Kontrollkanäle und eine maximal mögliche Leistung eines, mehrerer oder aller Verkehrskanäle der Mobilfunksendeeinrichtungen 14 in dem Gebiet 22 und die Einrichtung 38 passt die Sollwerte über die Stellmittel 36 an eine vorhandene oder erwartete Datenverkehrsauslastung an. Weiterhin werden Mobilfunknetzparameter einer Zugangskontrolle (Admission Control) und Überlastkontrolle (Congestion Control) angepasst. Vorzugsweise wird bei einer Anpassung und Steuerung dieser Parameter die Leistung des Pilotkanals und relativ zu diesem andere Parameter nur soweit gesenkt, das eine geschlossene Funkversorgung in dem Gebiet 22 erhalten bleibt. Hierdurch wird eine Zellüberlappung auf ein notweniges Maß reduziert.

Es erfolgt eine kontinuierliche Berechnung der Sollwerte des Leistungsverstärker-Betriebspunktes oder anderer Steuerparameter je nach Datenverkehrsauslastung in dem Gebiet 22 an einen optimalen Wert innerhalb eines vorgegebenen Bereichs von möglichen Werten. In dem Bereich sind Werte in Abhängigkeit einer Auslastung stufenweise oder kontinuierlich vorgegeben.

Bei einem parallel zum Mobilfunknetz 10 ausgebauten Mobilfunknetz, z.B. nach dem GSM-Standard, ist in einer weiteren Ausführung der Einrichtung 38 neben einer Steuerung des Leistungsverstärkers 34 während eines verstärkenden Betriebs zusätzlich ein minimaler oder Standby-Betriebspunkt für einen Leistungsverstärker 34 vorgesehen. Bei einer hinreichend niedrigen Auslastung einer oder aller Funkzellen 20 einer Mobilfunksendeeinrichtung 14 und solange kein das UMTS-Mobilfunknetz 10 benötigender Dienst von einem Mobilfunkendgerät 12 innerhalb dieser Funkzellen 20 angefordert wird, werden der Betriebspunkt- Sollwert des Leistungsverstärkers 34 so berechnet, dass der Leistungsverstärker 34 auf einem minimalen Sollwert gesteuert wird und die Mobilfunksendeeinrichtung 14 in den Standby-Modus versetzt wird. Eine Datenübermittlung für ein Mobilfunkendgerät 12 im Abdeckungsbereich der Mobilfunksendeeinrichtung 14 wird in diesem Fall über das parallele, nicht dargestellte Mobilfunknetz abgewickelt. Sobald ein gestiegenes Datenverkehrsvolumen oder ein angeforderter Dienst die entsprechende Mobilfunksendeeinrichtung 14 mit dem Leistungsverstärker 34 benötigt, wird von dem Standby-Modus in einen Betriebsmodus umgeschaltet. In dem Betriebsmodus werden Daten wieder von der entsprechenden Mobilfunksendeeinrichtung 14 des Mobilfunknetzes 10 übertragen. Dabei findet eine Verstärkung durch den Leistungsverstärker 34 und eine Steuerung des Leistungsverstärkers 34 mit den wieder berechneten Sollwerten durch die Einrichtung 38 statt.

Durch die Einrichtung 38 und das entsprechende Verfahren wird der Energieverbrauch jeder Mobilfunksendeeinrichtung 14 des Gebiets 22 gesenkt. Dies führt zu einer erheblichen Energieeinsparung in dem Gebiet 22 des Mobilfunknetzes 10. Ein Betrieb des Mobilfunknetzes 10 ist wesentlich kostengünstiger und umweltschonender durchführbar.

## Patentansprüche

1. Einrichtung (38) zur Steuerung eines Leistungsverstärkers (34) einer Mobilfunksendeeinrichtung (14) in einem Mobilfunknetz (10), umfassend
- eine Erfassungseinheit (40) zur Erfassung von mindestens einem Mobilfunknetzparameter von Funkzellen (20) einzelner oder mehrerer Mobilfunksendeeinrichtungen (14),
- eine Auswerteeinheit (42) zur Bestimmung eines Sollwerts hinsichtlich der Größe Pilotkanalleistung anhand des mindestens einen Mobilfunknetzparameters und
- eine Sendeeinheit (44) für Steuerparameter, welche zur Übertragung des bestimmten Sollwerts angepasst ist,
**dadurch gekennzeichnet, dass**
die Auswerteeinheit (42) Sollwerte für die folgenden Größen Leistungsverstärker-Betriebspunkt sowie Leistung anderer permanenter Kontrollkanäle berechnet und der berechnete Betriebspunkt-Sollwert des Leistungsverstärkers (34) bewirkt, dass dieser wirksam auf eine notwendige Leistungsaufnahme für einen störungsfreien Datenverkehr je nach Datenverkehrsauslastung reduziert wird, wobei
eine Ermittlung der bestimmten Sollwerte für Steuerparameter des Leistungsverstärkers (34) für eine in naher Zukunft erwartete Auslastung des Mobilfunknetzes (10) mittels in der Vergangenheit festgestellter Auslastungen des Mobilfunknetzes (10) erfolgt.

2. Einrichtung (38) zur Steuerung eines Leistungsverstärkers (34) nach Anspruch 1, **dadurch gekennzeichnet, dass** einer der Mobilfunknetzparameter ein Funkzellenauslastungsparameter oder ein Funkzellenauslastungsparameter in Bezug auf einen maximalen Funkzellenauslastungswert ist.

3. Einrichtung (38) zur Steuerung eines Leistungsverstärkers (34) nach Anspruch 1 oder 2, **dadurch gekennzeichnet, dass** der Sollwert für den Leistungsverstärker-Betriebspunkt ein in der Auswerteeinheit (42) berechneter Wert ist.

4. Verfahren zur Steuerung eines Leistungsverstärkers (34) in einem Mobilfunknetz (10) mit folgenden Verfahrensschritten:
a) Empfangen von mindestens einem Mobilfunknetzparameter,
b) Auswerten des mindestens einen Mobilfunknetzparameters,
c) Festlegen eines Sollwerts hinsichtlich der Größe Pilotkanalleistung auf Basis des Auswerteergebnisses, und
d) Übertragen des mindestens einen festgelegten Sollwerts,
**dadurch gekennzeichnet, dass**
Sollwerte für die folgenden Größen Leistungsverstärker-Betriebspunkt sowie Leistung anderer permanenter Kontrollkanäle berechnet werden und der berechnete Betriebspunkt-Sollwert des Leistungsverstärkers (34) bewirkt, dass dieser wirksam auf eine notwendige Leistungsaufnahme für einen störungsfreien Datenverkehr je nach Datenverkehrsauslastung reduziert wird, wobei
das Festlegen der Sollwerte auf Basis des Auswerteergebnisses für eine in naher Zukunft erwartete Auslastung des Mobilfunknetzes (10) mittels in der Vergangenheit festgestellter Auslastungen des Mobilfunknetzes (10) erfolgt.

5. Verfahren zur Steuerung eines Leistungsverstärkers (34) nach Anspruch 4, **dadurch gekennzeichnet, dass** die Mobilfunknetzparameter mindestens einer Funkzelle (20) empfangen und ausgewertet werden.

6. Verfahren zur Steuerung eines Leistungsverstärkers (34) nach Anspruch 4 oder 5, **dadurch gekennzeichnet, dass** Mobilfunknetzparameter als Funkzellenauslastungsparameter oder als Funkzellenauslastungsparameter in Bezug auf einen maximalen Funkzellenauslastungswert empfangen und ausgewertet werden.

7. Verfahren zur Steuerung eines Leistungsverstärkers (34) nach einem der Ansprüche 4 bis 6, **dadurch gekennzeichnet, dass** die Festlegung des Sollwerts durch eine Berechnung mindestens einer der folgenden Größen: Leistungsverstärker-Betriebspunkt, Pilotkanalleistung und Leistung anderer permanenter Kontrollkanäle erfolgt.

8. Computerprogrammprodukt, gespeichert auf einen Datenträger oder in einer über ein Datennetz herunterladbaren Form,
**dadurch gekennzeichnet, dass**
das Computerprogrammprodukt angepasst ist, eine speicherprogrammierbare Steuerung zur Umsetzung eines Verfahrens nach einem der Ansprüche 4 bis 7 zu steuern.

## Claims

1. A device (38) for controlling an amplifier (34) of a mobile radio transmission device (14) in a mobile radio network (10), comprising
- a recording unit for gathering at least one mobile radio network parameter of radio cells (20) of individual or several mobile radio transmission devices (14),
- an evaluation unit (42) for determining a nominal value with respect to the size of the pilot channel output by means of the at least one mobile radio network parameter and
- a sender unit (44) for control parameters which is adapted for the transmission of the determined nominal value,
**characterized in that**
the evaluation unit (42) calculates nominal values for the following parameters amplifier operating point as well as output of other permanent control channels, and the calculated nominal value of the operating point of the amplifier (34) ensures that this one will be efficiently reduced to a power input required for an undisturbed data transmission depending on the data transmission load, wherein
a determination of the specific nominal values of control parameters of the amplifier (34) for a utilization of the mobile radio network (10) to be expected in the near future will be carried out by means of utilizations of the mobile radio network (10) determined in the past.

2. A device (38) for controlling an amplifier (34) according to claim 1, **characterized in that** one of the mobile radio network parameters is a radio cell utilization parameter or a radio cell utilization parameter with respect to a maximum radio cell utilization value.

3. A device (38) for controlling an amplifier (34) according to claim 1 or 2, **characterized in that** the nominal value of the amplifier operating point is a value calculated in the evaluation unit (42).

4. A method for controlling an amplifier (34) in a mobile radio network (10) comprising the following process steps:
a) receiving at least one mobile radio network parameter,
b) evaluating the at least one mobile radio network parameter,
c) determining a nominal value with respect to the size of the pilot channel output on the base of the evaluation result, and
d) transmitting the at least one determined nominal value,
**characterized in that**
nominal values for the following parameters amplifier operating point as well as output of other permanent control channels are calculated, and the calculated nominal value of the operating point of the amplifier (34) ensures that this one will be efficiently reduced to a power input required for an undisturbed data transmission depending on the data transmission load, wherein
the determination of the nominal values will be carried out on the base of the evaluation result for a utilization of the mobile radio network (10) to be expected in the near future by means of utilizations of the mobile radio network (10) determined in the past.

5. A method for controlling an amplifier (34) according to claim 4, **characterized in that** the mobile radio network parameters of at least one radio cell (20) will be received and evaluated.

6. A method for controlling an amplifier (34) according to claim 4 or claim 5, **characterized in that** mobile radio network parameters will be received and evaluated as radio cell utilization parameters or as radio cell utilization parameters with respect to a maximum radio cell utilization value.

7. A method for controlling an amplifier (34) according to one of the claims 4 to 6, **characterized in that** the determination of the nominal value will be carried out by means of a calculation of at least one of the parameters: amplifier operating point; pilot channel output and output of other permanent control channels.

8. A computer program product stored on a data carrier or in a form that can be downloaded via a data network,
**characterized in that**
the computer program product is adapted for realizing a programmable logic controller for carrying out a method according to one of the claims 4 to 7.

## Revendications

1. Dispositif (38) de commande d'un amplificateur de puissance (34) d'un dispositif d'émission radio mobile (14) dans un réseau radio mobile (10), comprenant
- une unité de détection (40) destinée à saisir au moins un paramètre de réseau radio mobile des cellules radio (20) des dispositifs d'émission radio mobile (14) individuels ou de plusieurs dispositifs d'émission radio mobile (14),
- une unité d'évaluation (42) pour déterminer une valeur cible par rapport à la grandeur de la puissance du canal pilote par moyen de l'au moins un paramètre de réseau radio mobile et
- une unité émettrice (44) pour des paramètres de commande, laquelle est adaptée pour transmettre la valeur cible déterminée,
**caractérisé en ce que**
l'unité d'évaluation (42) calcule des valeurs cible pour les grandeurs suivantes point de fonctionnement de l'amplificateur de puissance ainsi que la puissance d'autres canaux de contrôle permanents, et la valeur cible calculée du point de fonctionnement de l'amplificateur de puissance (34) a pour effet que celui-ci est réduit de manière efficace à une puissance absorbée nécessaire pour un transfert de données sans problèmes en fonction de l'utilisation du transfert de données, dans lequel
une détermination des valeurs cible spécifiques pour des paramètres de commande de l'amplificateur de puissance (34) est effectuée pour une utilisation du réseau radio mobile (10) attendue dans un avenir proche sur la base d'utilisations du réseau radio mobile (10) déterminées dans le passé.

2. Dispositif (38) de commande d'un amplificateur de puissance (34) selon la revendication 1, **caractérisé en ce que** l'un des paramètres de réseau radio mobile est un paramètre d'utilisation de cellule radio ou un paramètre d'utilisation de cellule radio par rapport à une valeur d'utilisation de cellule radio maximale.

3. Dispositif (38) de commande d'un amplificateur de puissance (34) selon la revendication 1 ou la revendication 2, **caractérisé en ce que** la valeur cible du point de fonctionnement de l'amplificateur de puissance est une valeur calculée dans l'unité d'évaluation (42).

4. Procédé de commande d'un amplificateur de puissance (34) dans un réseau radio mobile (10) comprenant les étapes de procédé suivantes de:
a) recevoir au moins un paramètre de réseau radio mobile,
b) évaluer l'au moins un paramètre de réseau radio mobile,
c) déterminer une valeur cible par rapport à la grandeur de la puissance de canal pilote sur la base du résultat d'évaluation, et
d) transmettre l'au moins une valeur cible déterminée,
**caractérisé en ce que**
des valeurs cible sont calculées pour les grandeurs suivantes point de fonctionnement de l'amplificateur de puissance ainsi que la puissance d'autres canaux de contrôle permanents, et la valeur cible calculée du point de fonctionnement de l'amplificateur de puissance (34) a pour effet que celui-ci est réduit de manière efficace à une puissance absorbée nécessaire pour un transfert de données sans problèmes en fonction de l'utilisation du transfert de données, dans lequel
la détermination des valeurs cible sur la base du résultat d'évaluation est effectuée pour une utilisation du réseau radio mobile (10) attendue dans un avenir proche sur la base d'utilisations du réseau radio mobile (10) déterminées dans le passé.

5. Procédé de commande d'un amplificateur de puissance (34) selon la revendication 4, **caractérisé en ce que** les paramètres de réseau radio mobile d'au moins une cellule radio (20) sont reçus et évalués.

6. Procédé de commande d'un amplificateur de puissance (34) selon la revendication 4 ou la revendication 5, **caractérisé en ce que** des paramètres de réseau radio mobile sont reçus et évalués comme des paramètres d'utilisation de cellules radio ou comme des paramètres d'utilisation de cellules radio par rapport à une valeur d'utilisation de cellules radio maximale.

7. Procédé de commande d'un amplificateur de puissance (34) selon l'une des revendications 4 à 6, **caractérisé en ce que** la détermination de la valeur cible se fait par un calcul d'au moins une des grandeurs suivantes : le point de fonctionnement de l'amplificateur de puissance, la puissance de canal pilote et la puissance d'autres canaux de contrôle permanents.

8. Produit de programme d'ordinateur stocké sur un support de données ou sous forme téléchargeable via un réseau de données,
**caractérisé en ce que**
le produit de programme d'ordinateur est adapté à réaliser un automate programmable industriel pour effectuer un procédé selon l'une des revendications 4 à 7.
